Europäisches Patentamt

European Patent Office

Office européen des brevets

(19)

(11) Veröffentlichungsnummer: **0 222 368 B1**

(12) ## EUROPÄISCHE PATENTSCHRIFT

(45) Veröffentlichungstag der Patentschrift: **10.04.91**

(51) Int. Cl.⁵: **H04J 3/06, H04L 7/04**

(21) Anmeldenummer: **86115630.5**

(22) Anmeldetag: **11.11.86**

(54) Steuerschaltkreis für empfangsseitige Rahmensynchronisation.

(30) Priorität: **14.11.85 DE 3540424**

(43) Veröffentlichungstag der Anmeldung:
**20.05.87 Patentblatt 87/21**

(45) Bekanntmachung des Hinweises auf die
Patenterteilung:
**10.04.91 Patentblatt 91/15**

(84) Benannte Vertragsstaaten:
**AT BE CH DE FR GB GR IT LI NL SE**

(56) Entgegenhaltungen:
**FR-A- 2 404 972**

(73) Patentinhaber: **Siemens Aktiengesellschaft
Wittelsbacherplatz 2
W-8000 München 2(DE)**

(72) Erfinder: **Moritz, Peter, Dipl.-Ing.
Wieselweg 8
W-8013 Haar(DE)**

## Beschreibung

### Technisches Gebiet

Die Erfindung bezieht sich auf einen Steuerschaltkreis für die Durchführung einer Rahmensynchronisation in einem Empfänger für im Zeitmultiplex übertragene, eine Rahmenkennung in Form eines Synchronwortes aufweisende digitale Signale, bei dem das ankommende digitale Signal einem Synchronwortdetektor zugeführt ist, der in Abhängigkeit eines vom Bittakt über einen variablen Teiler abgeleiteten Such-Rahmenpulses das digitale Signal, bezogen auf einen Signalrahmen, nach dem Synchronwort absucht, bei negativem Ergebnis ein Synchronwort-Fehlsignal an einen Steuereingang des variablen Teilers zum zeitlichen Verschieben des Such-Rahmenpulses und bei positivem Ergebnis ein den gesuchten Rahmenpuls markierendes Synchronwort-Erkennungssignal abgibt.

### Zugrundeliegender Stand der Technik

Synchronisiereinrichtungen dieser Art, wie sie beispielsweise durch die Literaturstelle "Review of the Electrical Communication Laboratory", Vol. 17, Nr. 3-4, März-April 1969, Seiten 296 bis 310 beschrieben sind, können unterschiedliche Arbeitsbedingungen zugrundeliegen.

Wird beispielsweise ein solcher Empfänger in einer einfachen Punkt-zu-Punktverbindung verwendet, dann ist es üblich, die Rahmensynchronisation über den vom ankommenden Signal abgeleiteten Bittakt zu gewinnen. Bei Verwendung eines solchen Empfängers in einer Netzstruktur, beispielsweise auf einer Vermittlungsstelle, die von einem eigenen Ortstakt Gebrauch macht, ist der Rahmenpuls vom Orts-Bittakt in der Regel vorgegeben. Hier muß dann das aus dem eingangsseitigen Pufferspeicher mit dem Orts-Bittakt ausgelesene empfangene Signal bitweise solange verschoben werden, bis der Orts-Rahmenpuls und das über das Synchronwort im Signal abgeleitete Synchronwort-Erkennungssignal zeitgleich auftreten.

In diesem Zusammenhang wirkt es sich als nachteilig aus, daß abhängig vom Einsatz eines solchen Empfängers hinsichtlich der Synchronisiereinrichtung unterschiedliche Empfängertypen vorgesehen werden müssen.

### Offenbarung der Erfindung

Der Erfindung liegt die Aufgabe zugrunde, für einen Empfänger der einleitend beschriebenen Art hinsichtlich seiner Synchronisiereinrichtung einen Steuerschaltkreis anzugeben, der bei geringem technischen Mehraufwand seinen Einsatz unabhängig davon ermöglicht, ob die Rahmensynchronisation vom Bittakt des ankommenden Signals abzuleiten ist oder aber ein Orts-Bittakt mit einem darauf bezogenen Orts-Rahmenpuls vorgegeben ist.

Diese Aufgabe wird gemäß der Erfindung durch die im Patentanspruch 1 angegebenen Merkmale gelöst.

Durch die erfindungsgemäße Lösung kann die Umschaltung von der einen auf die andere Taktart in außerordentlich einfacher Weise durch die gerätesystemeigene Steuerung vorgenommen werden. Darüber hinaus hat die Verwendung von zwei Teilern, einem variablen Teiler und einem festen Teiler den Vorteil, daß bei Verlust des Synchronismus unabhängig von der Taktart die Zuordnung der Kanäle des zeitmultiplexen digitalen Signals weiter aufrecht erhalten wird und erst nach Wiederherstellung des Synchronismus, sofern dies erforderlich ist, eine neue und richtige Zuordnung hergestellt wird.

### Kurze Beschreibung der Zeichnung

In der Zeichnung bedeuten die der näheren Erläuterung der Erfindung dienenden Figuren

Fig. 1     das Blockschaltbild des Steuerschaltkreises für die Rahmensynchronisation,

Fig. 2     das nähere Einzelheiten aufweisende Blockschaltbild des Synchronwortdetektors nach Fig. 1.

### Bester Weg zur Ausführung der Erfindung

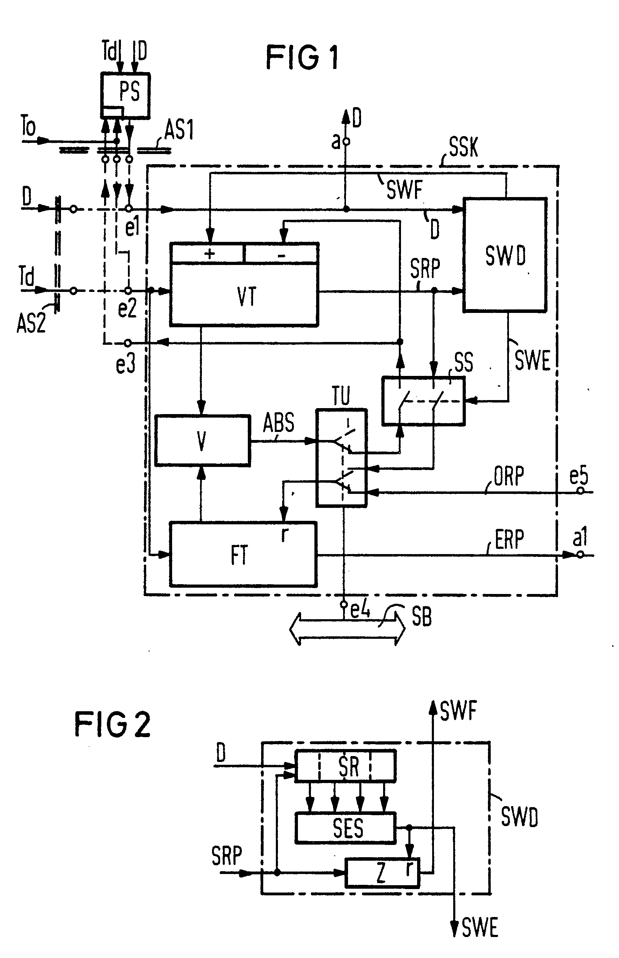

Der für unterschiedliche Taktarten geeignete Steuerschaltkreis ist in Fig. 1 mit SSK bezeichnet. Er weist drei Eingangsanschlüsse e1, e2 und e3 auf, die unterschiedlich beschaltet sind, je nachdem der Steuerschaltkreis SSK mit der andeutungsweise dargestellten ersten oder zweiten Anschlußschaltung AS1 oder AS2 zusammenarbeiten soll. Bei der ersten Anschlußschaltung AS1 wird davon ausgegangen, daß der Empfänger von einem ortseigenen Takt, dem sogenannten Orts-Bittakt To Gebrauch macht. In diesem Falle ist für das ankommende digitale Zeitmultiplexsignal ein Pufferspeicher PS vorgesehen, in den das Signal D mit seinem Datentakt Td eingelesen wird. Das Auslesen des in den Pufferspeicher eingespeicherten Signals D erfolgt mit dem Orts-Bittakt To, der hierbei auch an dem eingangsseitigen Anschluß e2 anliegt. Es sei in diesem Zusammenhang bemerkt, daß gegebenenfalls der Pufferspeicher PS ebenfalls bereits Teil des Steuerschaltkreises sein kann. Das aus dem Pufferspeicher ausgelesene Signal D wird dem Eingangsanschluß e1 zugeführt. Ferner wird dem Pufferspeicher PS auf der Ausleseseite über den Anschluß e3 ein noch näher zu erläuterndes Sperrsignal zugeführt, das bei seinem Auftreten ein Bit des Orts-Bittaktes To am Eingang des Pufferspeichers PS unterdrückt und auf diese Weise eine zeitliche Verschiebung des Auslesevorgangs des Signals D ermöglicht.

Die zweite Anschlußschaltung AS2 steht für ein Zusammenwirken des Steuerschaltkreises SSK für den Fall, in dem die Rahmensynchronisation vom Datentakt Td des ankommenden Signals D abgeleitet wid. Der Datentakt Td liegt hierbei am Eingangsanschluß e2 an, während das Signal D wiederum dem Eingangsanschluß e1 zugeführt wird.

Der Steuerschaltkreis SSK weist noch einen vierten eingangsseitigen Anschluß e4 auf, der einen Steuereingang für die Taktartenumschaltung dargestellt, und der über eine Leitung eines Steuerbus SB mit der geräteseitigen Steuereinrichtung verbunden ist. Das Signal D steht seinerseits am ausgangsseitigen Anschluß a für seine weitere Verwertung zur Verfügung.

Der Steuerschaltkreis SSK weist den Synchronwortdetektor SWD auf, dem vom eingangsseitigen Anschluß e1 her das Signal D zugeführt wird. Weiterhin weist der Steuerschaltkreis SSK den variablenen Teiler VT, den festen Teiler FT, der Vergleicher V, den Synchronschalter SS und den Taktartenumschalter TU auf. Über den variablen Teiler VT wird der Bittakt am eingangsseitigen Anschluß e2 auf den Rahmentakt heruntergeteilt und dem Synchronwortdetektor SWD in Form des Such-Rahmenpulses SRP zugeführt. In Abhängigkeit des Such-Rahmenpulses SRP wird jeweils ein vorgegebener Anteil des Signals D in einen Speicher innerhalb des Synchronwortdetektors SWD eingelesen und dort auf das Vorhandensein bzw. Nichtvorhandensein des Synchronwortes untersucht. Bei negativem Ergebnis gibt der Synchronwortdetektor SWD das Synchronwort-Fehlsignal SWF an den Plus-Steuereingang des variablen Teilers VT, wodurch der ausgangsseitige Such-Rahmenpuls SRP auf der Zeitachse nach links verschoben wird. Auf diese Weise werden, solange der Synchronwortdetektor SWD das Synchronwort im Signal D nicht erkennt, immer wieder neue, auf den Signalrahmen bezogene Signalanteile in den Synchronwortdetektor SWD eingelesen.

Sobald der Synchronwortdetektor SWD das Synchronwort erkennt, gibt er im Zeitpunkt des Erkennens das Synchronwort-Erkennungssignal SWE ab, mit dessen Hilfe der zwei Arbeitskontakte aufweisende Synchronschalter SS betätigt wird. In der angegebenen Schaltstellung des Taktartenschalters TU, die dem Zusammenarbeiten des Steuerschaltkreises SSK mit der ersten Anschlußschaltung AS1 entspricht, wird der Ausgang des Vergleichers V über den Taktartenumschalter TU und den Synchronschalter SS mit dem Negativ-Steuereingang des variablen Teilers VT verbunden. Dadurch wird auch das ein Ausblendsignal ABS darstellende Ausgangssignal des Vergleichers V über den eingangsseitigen Anschluß e3 des Steuerschaltkreises SSK mit dem Sperreingang des Orts-Bittaktes auf der Ausleseseite des Pufferspeichers PS verbunden. Gleichzeitig verbindet der Taktartenumschalter TU den Reset-Eingang r des festen Teilers FT mit der Lei tung, auf der über den eingangsseitigen Anschluß e5 der Orts-Rahmenpuls ORP zugeführt wird.

Der Vergleicher V vergleicht die Bitzählstellungen des variablen Teilers VT und des festen Teilers FT, denen beide eingangsseitig über den eingangsseitigen Anschluß e2 der Bittakt zugeführt wird, miteinander und gibt jedesmal dann, wenn er hinsichtlich der Zählstellung der beiden Teiler keine Übereinstimmung feststellt, ein Ausblendsignal ABS über den Taktartenumschalter TU und den Synchronschalter SS an den Negativ-Steuereingang des variablen Teilers VT und an den Sperreingang des Orts-Bittaktes auf der Ausleseseite des Pufferspeichers PS ab. Da ferner der feste Teiler FT mit jedem ankommenden Orts-Rahmenpuls ORP in seine Ausgangszählstellung rückumgesetzt wird, wird auf diese Weise der Such-Rahmenpuls SRP bei vom Synchronwortdetektor SWD erkannten Synchronwort solange auf der Zeitachse nach rechts verschoben, bis er mit dem Orts-Rahmenpuls ORP zeitgleich und damit der Synchronzustand erreicht ist.

In der unterbrochen gezeichneten Schaltstellung des Taktartenumschalters TU arbeitet der Steuerschaltkreis SSK mit der zweiten Anschlußschaltung AS2 zusammen. Der Vergleicher V wird hier nicht benötigt. Der feste Teiler FT erhält hier an seinem Reset-Eingang r über den Taktartumschalter TU und den Synchronschalter SS den Such-Rahmenpuls SRP am Ausgang des variablen Teilers VT, sobald der Synchronwortdetektor SWD das Synchronwort erhalten und mittels des Synchronwort-Erkennungssignals SWE den Synchronschalter SS zum Ansprechen gebracht hat. Der feste Teiler FT gibt dann an den ausgangsseitigen Anschluß a1 im Rhythmus des Rahmentaktes den Empfangssignal-Rahmenpuls ERP ab, der seinerseits die Rahmensynchronisation anzeigt.

Das näherer Einzelheiten aufweisende Schaltbild des Synchronwortdetektors SWD nach Fig. 2 weist ein Schieberegister SR, eine mit dem Schieberegister SR verbundene Synchronwort-Erkennungsschaltung SES sowie einen Zähler Z auf. Der Zähler Z zählt die ankommenden Such-Rahmenpulse SRP, die ihrerseits den Schiebetakt für das Schieberegister SR bilden, in das Teile des Datensignals D eingespeichert werden. Sobald der Zähler Z von seiner maximalen Zählstellung in seine Anfangszählstellung springt, gibt er das Synchronwort-Fehlsignal SWF ab. Sobald jedoch die Synchron-Erkennungsschaltung SES das Synchronwort erkennt und damit ausgangsseitig das Synchronwort-Erkennungssignal SWE abgibt, wird der Zähler Z von dem Synchronwort-Erkennungssignal SWE über seinen Reset-Eingang r vorzeitig in seine Ausgangsstellung zurückgesetzt und damit die Abgabe weiterer Synchronwort-Fehlsignale SWF unterbunden.

## Gewerbliche Verwertbarkeit

Der beschriebene Steuerschaltkreis läßt sich in außerordentlich vorteilhafter Weise bei Empfängereinrichtungen für digitale Übertragungssysteme einsetzen und zwar unabhängig davon, ob die Empfängereinrichtung einer End- oder Zwischenstelle bzw. einer Vermittlungsstelle in einem Netz zugeordnet wird.

## Ansprüche

1. Steuerschaltkreis (SSK) für die Durchführung einer Rahmensynchronistion in einem Empfänger für im Zeitmultiplex übertragene, eine Rahmenkennung in Form eines Synchronwortes aufweisende digitale Signale, bei dem das ankommende digitale Signal (D) einem Synchronwortdetektor (SWD) zugeführt ist, der in Abhängigkeit eines vom Bittakt über einen variablen Teiler (VT) abgeleiteten Such-Rahmenpulses das digitale Signal, bezogen auf einen Signalrahmen, nach dem Synchronwort absucht, bei negativem Ergebnis ein Synchronwortfehlsignal (SWF) an einen Steuereingang des variablen Teilers zum zeitlichen Verschieben des Such-Rahmenpulses und bei positivem Ergebnis ein den gesuchten Rahmenpuls markierendes Synchronwort-Erkennungssignal (SWE) abgibt, **dadurch gekennzeichnet, daß** ein weiterer fester Teiler (FT) vorgesehen ist, der den eingangsseitigen Bittakt auf den Signalrahmentakt herunterteilt und dessen bittaktabhängige Zählstellung mit der bittaktabhängigen Zählstellung de s variablen Teilers (VT) in einem Vergleicher (V) auf Übereinstimmung überprüft ist, daß außerdem ein vom Synchronwort-Erkennungssignal (SWE) betätigter Synchronschalter (SS) mit zwei Arbeitskontakten sowie ein von einem empfängerseitigen Steuersignalgeber über einen Steuersignalbus (SB) umschaltbarer Taktartumschalter (TU) mit zwei Umschaltern vorgesehen sind und daß bei betätigtem Synchronschalter der Taktartumschalter einerseits in Schaltstellung "Orts-Bittakt" den Reset-Eingang des Festteilers mit einer den Orts-Rahmenpuls zuführenden Leitung und den Ausgang des Vergleichers mit einem Steuereingang des variablen Teilers sowie einem Ausgangsanschluß und andererseits in Schaltstellung "Signal -Bittakt" den Ausgang des variablen Teilers mit dem Reset-Eingang des festen Teilers verbindet, an dessen Ausgang hierbei der Empfangssignal-Rahmenpuls (ERP) abnehmbar ist.

## Claims

1. Control circuit (SSK) for carrying out a frame synchronisation in a receiver for digital signals transmitted in time-division multiplex and exhibiting a frame alignment signal in the form of a synchronisation word, in which the incoming digital signal (D) is supplied to a synchronisation word detector (SWD) which, in dependence on a search frame pulse derived from the bit clock via a variable divider (VT), searches the digital signal, referred to a signal frame, for the synchronisation word, and, with negative result, outputs a synchronisation word error signal (SWF) to a control input of the variable divider (VT) for shifting the search frame pulse in time and, with a positive result, outputs a synchronisation word recognition signal (SWE) marking the frame pulse found, characterised in that a further fixed divider (FT) is provided which divides the input bit clock down to the signal frame clock and the bit-clock-dependent count of which is checked for correspondence with the bit-clockdependent count of the variable divider (VT) in a comparator (V), that, in addition, a synchronisation switch (SS) activated by the synchronisation word recognition signal (SWE) with two operation contacts and a clock-type change-over switch (TU) with two change-over switches, which can be switched over by a receiver-side control signal transmitter via a control signal bus (SB) are provided and that, when the synchronisation switch is activated, the clock-type change-over switch, on the one hand, in the switch position "local bit clock" connects the reset input of the fixed divider to a line supplying the local frame pulse and the output of the comparator to a control input of the variable divider and to an output connection and, on the other hand, in the switch position "signal bit clock" connects the output of the variable divider to the reset input of the fixed divider at the output of which, in this condition, the receive signal frame pulse (ERP) can be picked up.

trame du signal de réception (ERP) peut être prélevée.

**Revendications**

1. Circuit de commande (SSK) pour réaliser la synchronisation de trames dans un récepteur pour des signaux numériques transmis par multiplexage temporel et possédant un indicatif de trame sous la forme d'un mot de synchronisation, et dans lequel le signal numérique arrivant (D) est envoyé à un détecteur de mots de synchronisation (SWD), qui qui explore le signal numérique, en rapport avec la trame de signaux, en recherchant le mot de synchronisation, en fonction d'une impulsion de trame de recherche dérivée de la cadence binaire par l'intermédiaire d'un diviseur variable (VT), et, dans le cas d'un résultat négatif, envoie un signal (SWF) d'absence de mot de synchronisation à une entrée de commande du diviseur variable (VT) pour le décalage temporel de l'impulsion de trame de recherche et, dans le cas d'un résultat positif, un signal (SWE) d'identification du mot de synchronisation, qui marque l'impulsion de trame recherchée, caractérisé par le fait qu'il est prévu un autre diviseur fixe (FT), qui divise la cadence binaire côté entrée pour produire la cadence de trame du signal et dont la position de comptage, qui dépend de la cadence binaire, est contrôlée pour savoir si elle coïncide avec la position de comptage, qui dépend de la cadence binaire, du diviseur variable (VT), dans un comparateur (V), qu'en outre il est prévu un interrupteur synchrone (SS) activé par le signal (SW1) d'identification du mot de synchronisation et comportant deux contacts de travail ainsi qu'un commutateur de type de cadence (TU) qui peut être commuté par un générateur de signaux de commande, situé sur le côté réception, par l'intermédiaire d'un bus (SB) de transmission de signaux de commande, et comportant deux commutateurs et que, lorsque l'interrupteur de synchronisation est actionné, d'une part lorsque le commutateur des types de cadences est dans la position de commutation "cadence binaire locale", il relie l'entrée de remise à l'état initial du diviseur fixe à une ligne amenant l'impulsion de trame locale, et la sortie du comparateur à une entrée de commande du diviseur variable ainsi qu'à une borne de sortie et d'autre part, lorsqu'il est dans la position de commutation "cadence binaire des signaux", il relie la sortie du diviseur variable à l'entrée de remise à l'état initial du diviseur fixe, sur la sortie duquel l'impulsion de

# FIG 1

# FIG 2